# EUROPÄISCHE PATENTSCHRIFT

(11) **EP 3 531 067 B1**
(45) Veröffentlichungstag und Bekanntmachung des Hinweises auf die Patenterteilung: **02.04.2025**
(21) Anmeldenummer: 19000092.7
(22) Anmeldetag: 20.02.2019
(51) Int. Cl.: G01B 11/25, G01M 11/02

(54) **VORRICHTUNG UND VERFAHREN ZUM VERMESSEN MINDESTENS EINES OPTISCH WIRKSAMEN GEGENSTANDS**
DEVICE AND METHOD FOR MEASURING AT LEAST ONE OPTICALLY ACTIVE OBJECT
DISPOSITIF ET PROCÉDÉ DE MESURE D'AU MOINS UN OBJET OPTIQUEMENT ACTIF

(30) Priorität: 21.02.2018 DE 102018001385; 21.09.2018 DE 102018007463
(43) Veröffentlichungstag der Anmeldung: 28.08.2019
(73) Patentinhaber: Schneider GmbH & Co. KG, 35112 Fronhausen (DE)
(72) Erfinder: Schneider, Gunter, 35112 Marburg (DE); Huttenhuis, Stephan, 35096 Weimar-Niederweimar (DE); Schneider, Sebastian, 35037 Marburg (DE)
(74) Vertreter: Von Rohr Patentanwälte Partnerschaft mbB

(56) Entgegenhaltungen:
- EP-A2- 1 093 907
- WO-A1-2014/019806
- DE-T2- 69 726 506
- US-A1- 2011 075 887

## Beschreibung

Die vorliegende Erfindung betrifft ein Verfahren zur Vermessung mindestens eines optisch wirksamen Gegenstands mit einer Oberseite und einer Unterseite, wobei der mindestens eine optisch wirksame Gegenstand mit einer Messstrahlung bestrahlt wird und die daraus resultierende Strahlung gemessen wird. Die vorliegende Erfindung betrifft ferner eine Vorrichtung zur Vermessung mindestens eines optisch wirksamen Gegenstands, mit einer Strahlungsquelle, einer Messeinrichtung und Mitteln zum Halten des mindestens einen optisch wirksamen Gegenstands zwischen der Strahlungsquelle und der Messeinrichtung.

Eine gattungsgemäße Vorrichtung und ein gattungsgemäßes Verfahren sind aus der internationalen Patentanmeldung WO 2016/095939 A1 bekannt. Diese Druckschrift beschreibt ein Verfahren und eine Vorrichtung zum Randbearbeiten einer optischen Linse, wobei die Vorrichtung eine Messeinrichtung zur Bestimmung der Orientierung und der Kontur der optischen Linse aufweist. Die optische Linse ist hierbei zwischen einer Strahlungsquelle und einem Messgerät angeordnet. Nachteilig hierbei ist, dass nur die für die Randbearbeitung der optischen Linse erforderlichen Daten ermittelt werden können.

Die internationale Patentanmeldung WO 2014/019806 offenbart ein Verfahren und eine Vorrichtung zur Bestimmung einer geometrischen Eigenschaft einer Linse für ein Brillenglas unter Nutzung des Fluoreszenzeffekts. Hierbei wird eine Oberfläche der zu vermessenden Linse lotrecht mit einer streifenförmigen Anregungsstrahlung bestrahlt, wobei die Linse unter der Anregungsstrahlung hindurchgeführt wird. Die erzeugte Fluoreszenzstrahlung wird mittels einer unter einem Winkel angeordneten Kamera detektiert. Die Auswertung erfolgt als Vergleich des detektierten Bildes mit Referenzwerten für gegebene Linsentypen (bspw. single vision, bifocal, progressive, etc.). Diese Messvorrichtung und das damit durchführbare Verfahren sind auf das berührungslose Abtasten der Linsenoberfläche und die schnelle Bestimmung des Linsentyps beschränkt.

Die deutsche Patentanmeldung DE 198 37 932 A1 beschreibt ein Verfahren und eine Vorrichtung zur Ermittlung der Oberflächenform der Hornhaut des menschlichen Auges unter Nutzung des Fluoreszenzeffekts, wobei die Oberfläche mittels Triangulation vermessen wird. Hierfür wird die Hornhaut mit Anregungsstrahlung bestrahlt, wobei zugleich ein Streifenmuster auf die Hornhaut projiziert wird, und die resultierende streifenförmige Fluoreszenzstrahlung wird detektiert und ausgewertet. Diese Vorrichtung und dieses Verfahren sind auf die Anforderungen und Rahmenbedingungen eines laserchirurgischen Eingriffs an der Hornhaut ausgerichtet.

Die internationale Patentanmeldung WO 2005/121740 A1 offenbart eine Messvorrichtung für Linsen zur Detektion unterschiedlicher Fehlertypen in der Linsenoberfläche. Ein programmierbarer LCD-Schirm produziert sich periodisch wiederholende Gittermuster. Die zu vermessende Linse wird mit mehreren Aufnahmen unter jeweils zeitlich und räumlich verschobenen Gittermustern erfasst. Die Einzelbilder werden rechnerisch in ein Gesamtbild überführt, welches Oberflächenfehler in der Linse sichtbar macht. Auch diese Messvorrichtung ist auf die Erfassung spezieller Daten, nämlich Oberflächenfehler in der Linse, beschränkt.

US 2011/0075887 A1 betrifft eine Vorrichtung und ein Verfahren zur Bestimmung der Verschiebung eines Linsenfokus. Eine erste Strahlungsquelle sendet Licht aus, das von einem halbdurchlässigen Spiegel auf eine Linse umgelenkt wird, von dieser reflektiert wird und mittels einer Kamera erfasst wird. Mittels der reflektierten Strahlung wird die Position der Linse in einem Gestell bestimmt. Die Vorrichtung weist eine zweite Lichtquelle auf, deren Strahlung durch die Linse transmittiert wird und von der gleichen Kamera erfasst wird. Die Strahlung der zweiten Lichtquelle dient der Bestimmung des Linsenfokus. Mittels der Position der Linse und des Linsenfokus kann eine Verschiebung des Linsenfokus festgestellt werden.

Die EP 1 093 907 A2 betrifft ein Verfahren und eine Vorrichtung zum automatischen Blocken einer Linse, wobei vor dem Blocken geometrische und/oder optische Eigenschaften der Linse bestimmt werden. Zur Bestimmung geometrischer Eigenschaften kann die Vorrichtung eine Lichtquelle aufweisen. Das Licht wird über einen halbdurchlässigen Spiegel auf die Linse gelenkt, tritt durch die Linse hindurch und wird anschließend von einem Schirm reflektiert, tritt erneut durch die Linse hindurch und wird dann von einer Kamera erfasst. Zur Bestimmung optischer Eigenschaften der Linse kann die Vorrichtung eine weitere Lichtquelle aufweisen, die ein Strahlengitter erzeugt, das durch die Linse transmittiert wird und von einer bzw. der Kamera erfasst wird. Wenn beide Lichtquellen vorgesehen sind, ist der Schirm verschwenkbar, sodass wahlweise die Lichtquelle zur Bestimmung der geometrischen Eigenschaften oder die Lichtquelle zur Bestimmung der optischen Eigenschaften verwendet werden kann.

Die Aufgabe der vorliegenden Erfindung besteht somit darin, eine gattungsgemäße Vorrichtung derart weiterzubilden, dass eine kompakt bauende Vorrichtung für eine Bestimmung verschiedener Kenngrößen, insbesondere von optischen Eigenschaften des optisch wirksamen Gegenstands, bereitgestellt wird. Dementsprechend soll ein gattungsgemäßes Verfahren derart weitergebildet werden, dass verschiedene Kenngrößen des optisch wirksamen Gegenstands bestimmt werden können.

Die Lösung besteht in einem Verfahren mit den Merkmalen des Patentanspruchs 1 sowie in einer Vorrichtung mit den Merkmalen des Patentanspruchs 8.

Das erfindungsgemäße Verfahren ist dadurch gekennzeichnet, dass als Messstrahlung mindestens eine Anregungsstrahlung zur Anregung von Lumineszenzstrahlung im Werkstoff des optisch wirksamen Gegenstands und/oder im Werkstoff einer Beschichtung des optisch wirksamen Gegenstands verwendet und als resultierende Strahlung die Lumineszenzstrahlung gemessen und/oder detektiert wird und mindestens eine durch den optisch wirksamen Gegenstand hindurchtretende Messstrahlung verwendet und als resultierende Strahlung die Transmissionsstrahlung gemessen und/oder detektiert wird.

Die resultierende Lumineszenzstrahlung wird zur Triangulation der Oberfläche(n) der bestrahlten Oberseite und/oder der bestrahlten Unterseite des optisch wirksamen Gegenstands verwendet. Insbesondere aus der Triangulation ergeben sich zahlreiche, über die bestrahlte Oberseite bzw. Unterseite verteilte Messpunkte, die eine besonders genaue Auswertung zur Bestimmung von Kenngrößen der Oberseite bzw. Unterseite erlauben.

Das erfindungsgemäße Verfahren ermöglicht die Verwendung der resultierenden Transmissionsstrahlung zur Bestimmung der Brechkraft des optisch wirksamen Gegenstands und/oder von Kenngrößen des optisch wirksamen Gegenstands.

Das erfindungsgemäße Verfahren erlaubt somit die sukzessive oder bevorzugt zeitgleiche Bestimmung verschiedenster Kenngrößen des optisch wirksamen Gegenstands, insbesondere die flächige Auswertung der Brechkraft des optisch wirksamen Gegenstands.

Zusätzlich kann vom optisch wirksamen Gegenstand reflektierbare Strahlung verwendet werden und als resultierende Strahlung die Reflexionsstrahlung gemessen und/oder detektiert werden.

Die erfindungsgemäße Vorrichtung zeichnet sich dadurch aus, dass sie zumindest eine erste Strahlungsquelle und zumindest eine zweite Strahlungsquelle aufweist, dass sie mindestens eine Mess- und/oder Detektionseinrichtung sowie mindestens eine Auswerteeinrichtung aufweist, wobei die zumindest erste Strahlungsquelle zu einer Oberseite oder einer Unterseite des optisch wirksamen Gegenstands hin orientiert ist und die zumindest zweite Strahlungsquelle zu einer Oberseite des optisch wirksamen Gegenstands hin orientiert ist, wobei die zumindest erste Strahlungsquelle Anregungsstrahlung zur Anregung von Lumineszenzstrahlung im Werkstoff des optisch wirksamen Gegenstands und/oder im Werkstoff einer Beschichtung des optisch wirksamen Gegenstands emittiert, wobei die zumindest zweite Strahlungsquelle zumindest durch den optisch wirksamen Gegenstand hindurchtretende Strahlung emittiert und wobei die Vorrichtung zur Durchführung des erfindungsgemäßen Verfahrens ausgebildet ist.

Die erfindungsgemäße Vorrichtung und das erfindungsgemäße Verfahren erlauben es somit, den optisch wirksamen Gegenstand auf besonders einfache und flexible Weise zu vermessen, insbesondere abhängig von den im Einzelfall gewünschten Messdaten, abhängig von den Eigenschaften des Werkstoffs oder der Werkstoffe des zu vermessenden optisch wirksamen Gegenstands sowie seinem Bearbeitungsstatus.

Die erfindungsgemäße Vorrichtung sowie das erfindungsgemäße Messverfahren ermöglichen eine an die Anforderungen des Einzelfalls angepasste, schnelle, standardisierbare Vermessung des optisch wirksamen Gegenstands in jedem beliebigen Bearbeitungsstadium unter gleichen oder vergleichbaren Randbedingungen.

Sowohl die erfindungsgemäße Vorrichtung als auch das erfindungsgemäße Verfahren können auf einfache Weise in ein bestehendes Bearbeitungssystem für den zu vermessenden optisch wirksamen Gegenstand integriert werden, und zwar sowohl in Bezug auf bestehende Bearbeitungsvorrichtungen als auch in Bezug auf bestehende Bearbeitungsabläufe.

Die erfindungsgemäße Vorrichtung zeichnet sich ferner durch einen einfachen Aufbau aus. Es ist insbesondere nicht zwingend notwendig, telezentrische Vorrichtungen vorzusehen, weil der Aufbau der erfindungsgemäßen Vorrichtung die Durchführung von Kalibrierungsmessungen erlaubt.

Darüber hinaus kann der Aufbau der erfindungsgemäßen Vorrichtung auf einfache Weise an die Anforderungen des Einzelfalls angepasst werden, die sich bspw. aus den Werkstoffeigenschaften des zu vermessenden optisch wirksamen Gegenstands ergeben. So kann ggf. die Wellenlänge der Anregungsstrahlung für die Lumineszenzstrahlung bspw. durch zuschaltbare Filter oder durch einfachen Austausch der Strahlungsquelle an die Lumineszenzeigenschaften des Werkstoffs des optisch wirksamen Gegenstands und/oder seiner Beschichtung im Einzelfall angepasst werden. Besonders bevorzugt ist hierbei eine Anregungsstrahlung mit einer Wellenlänge im Bereich von ca. 200 nm (UV-Strahlung) bis ca. 575 nm (Strahlung im sichtbaren Bereich; grün), da die Wellenlängen der emittierten Lumineszenzstrahlung dann in der Regel noch im sichtbaren Wellenlängenbereich (bis ca. 750 nm; rot) liegt und somit besonders einfach messbar und/oder detektierbar ist.

Damit können auch optisch wirksame Gegenstände aus Werkstoffen mit unterschiedlichen Lumineszenzeigenschaften, insbesondere mit Anregungsstrahlung unterschiedlicher Wellenlänge problemlos vermessen werden, indem die Wellenlänge der Anregungsstrahlung durch geeignete Wahl der jeweiligen Strahlungsquelle angepasst wird. Die Wellenlänge der von der jeweiligen Strahlungsquelle emittierten Anregungsstrahlung wird daher so gewählt, dass abhängig vom gewählten Werkstoff des optisch wirksamen Gegenstands der gewünschte Lumineszenzeffekt eintritt. Ein weiterer Vorteil besteht darin, dass wahlweise der Werkstoff des optisch wirksamen Gegenstands selbst als auch der Werkstoff einer ggf. auf dem optisch wirksamen Gegenstand vorhandenen Beschichtung zur Anregung von Lumineszenzstrahlung angeregt werden kann.

Der einfache Aufbau der erfindungsgemäßen Vorrichtung ermöglicht es ferner, dass die Vorrichtung als solche bspw. auf einem Gestell, einer Halterung oder einem Arbeitstisch angeordnet sein und zur Durchführung des erfindungsgemäßen Verfahrens verwendet werden kann. Die erfindungsgemäße Vorrichtung kann aber auch in eine andere Einrichtung, bspw. zur Bearbeitung, insbesondere formgebenden Bearbeitung eines optisch wirksamen Gegenstands integriert sein.

Eine weitere bevorzugte Ausgestaltung der erfindungsgemäßen Vorrichtung besteht darin, dass als zumindest erste Strahlungsquelle ein oder mehrere Laser verwendet werden. Die von einem Laser emittierte Strahlung ist in der Regel vergleichsweise energiereich, woraus eine von der Mess- und/oder Detektionseinrichtung erfasste entsprechend hohe Signalstärke resultiert.

Das erfindungsgemäße Verfahren ermöglicht ferner die Verknüpfung von Messdaten aus zwei oder mehr sukzessive oder zeitgleich mittels der erfindungsgemäßen Vorrichtung durchgeführten Messverfahren. Damit ist bspw. die Bestimmung einer flächigen Auswertung der Brechkraft des optisch wirksamen Gegenstands (so genannte "Power Map") möglich. Auf diese Weise ist es bspw. auch möglich, auftragsgemäß in einen optisch wirksamen Gegenstand in Form einer optische Linse eingearbeitete Prismen von Prismenfehlern zu unterscheiden. Dies trifft sowohl auf Prismenfehler zu, die bei der formgebenden Bearbeitung einer Linse entstehen können, als auch auf Prismenfehler, die aufgrund einer nicht korrekten Positionierung einer Linse während ihrer Vermessung detektiert werden können.

Die erfindungsgemäße Vorrichtung und das erfindungsgemäße Verfahren erlauben es schließlich, mit Bearbeitungs- oder sonstigen Fehlern behaftete optisch wirksamen Gegenstände möglichst zeitnah nach Auftreten des Fehlers aus einer Bearbeitungsvorrichtung bzw. einem Bearbeitungsablauf zu entfernen.

Vorteilhafte Weiterbildungen ergeben sich aus den Unteransprüchen.

Besonders bevorzugt emittiert die zumindest erste Strahlungsquelle mindestens eine Anregungsstrahlung zur Anregung von Fluoreszenzstrahlung im Werkstoff des optisch wirksamen Gegenstands und/oder im Werkstoff einer Beschichtung des optisch wirksamen Gegenstands emittiert. Auf diese Weise wird ein längeres Nachleuchten des Werkstoffs bzw. der Werkstoffe vermieden, welches auf das folgende Bearbeitungsverfahren und/oder den folgenden Bearbeitungsablauf störend einwirken könnte.

Vorzugsweise regt die zumindest erste Strahlungsquelle punktförmige, linienförmige, gitterförmige und/oder rasterförmige Lumineszenzstrahlung an. Dies kann bspw. dadurch geschehen, dass in den Strahlengang der von der zumindest ersten Strahlungsquelle emittierten Anregungsstrahlung eine beliebig ausgestaltete Schlitzblende oder Maske eingebracht wird, so dass die aus der Schlitzblende bzw. Maske austretende Anregungsstrahlung in Form eines entsprechenden Musters auf den zu vermessenden optisch wirksamen Gegenstand trifft und Lumineszenzstrahlung in Form dieses Musters anregt. Besonders bevorzugt ist es aber, eine Anordnung bzw. einen Array von zwei oder mehreren Strahlungsquellen vorzusehen, die jeweils bspw. punktförmige oder linienförmige Anregungsstrahlen emittierten, welche derart auf den zu vermessenden optisch wirksamen Gegenstand treffen, dass ein definiertes Muster resultiert, bspw. ein Punktmuster, Linienmuster, Streifenmuster, Gittermuster, Karomuster und so weiter.

In einer besonders bevorzugten Gestaltung der erfindungsgemäßen Vorrichtung emittiert die zumindest zweite Strahlungsquelle mindestens eine Strahlung in Form von Pixeln und/oder in Form von Mustern. Dies ist besonders vorteilhaft zur Messung und/oder Detektion von Kenngrößen des optisch wirksamen Gegenstands, wie bspw. seiner Kontur, seines Randes, seines Durchmessers, der Position von in den Gegenstand eingebrachten Markierungen (Gravuren u. dgl.) oder der Position von Mehrstärkenbereich bei Bifokal- oder Trifokalgläsern.

Zweckmäßigerweise sind die mindestens eine Mess- und/oder Detektionseinrichtung und zumindest eine der Strahlungsquellen zu derselben Oberseite bzw. Unterseite des optisch wirksamen Gegenstands (60) hin orientiert. Mit dieser Anordnung kann bspw. die zumindest eine Strahlungsquelle sowohl zur Emission von reflektierbarer Strahlung als auch zur Emission von Anregungsstrahlung zur Anregung eines Lumineszenzeffekts verwendet werden.

Die erfindungsgemäße Vorrichtung und das erfindungsgemäße Verfahren können insbesondere für die Vermessung von ophthalmischen Linsen und Linsenrohlingen in beliebigen Bearbeitungsstadien bzw. an beliebigen Positionen eines Bearbeitungsablaufs in einem Bearbeitungssystem verwendet werden. Selbstverständlich können auch beliebige andere optisch wirksame Gegenstände vermessen werden, bspw. optische Linsen für Mikroskope, Kameraobjektive, Ferngläser oder Fernrohre.

Ein Ausführungsbeispiel der vorliegenden Erfindung wird im Folgenden anhand der beigefügten Zeichnungen näher beschrieben. Es zeigen in schematischer, nicht maßstabsgetreuer Darstellung:
- Figur 1: eine schematische Darstellung eines Ausführungsbeispiels der erfindungsgemäßen Vorrichtung;
- Figur 2: eine perspektivische Darstellung des Ausführungsbeispiels der erfindungsgemäßen Vorrichtung gemäß Figur 1 in einer Beladeposition;
- Figur 3: eine perspektivische Darstellung des Ausführungsbeispiels der erfindungsgemäßen Vorrichtung gemäß Figur 1 in einer Messposition;
- Figur 4: ein weiteres Ausführungsbeispiel eines Teilbereichs der erfindungsgemäßen Messeinrichtung gemäß Figuren 2 und 3;
- Figur 5: ein Blockschema eines Ausführungsbeispiels des erfindungsgemäßen Verfahrens.

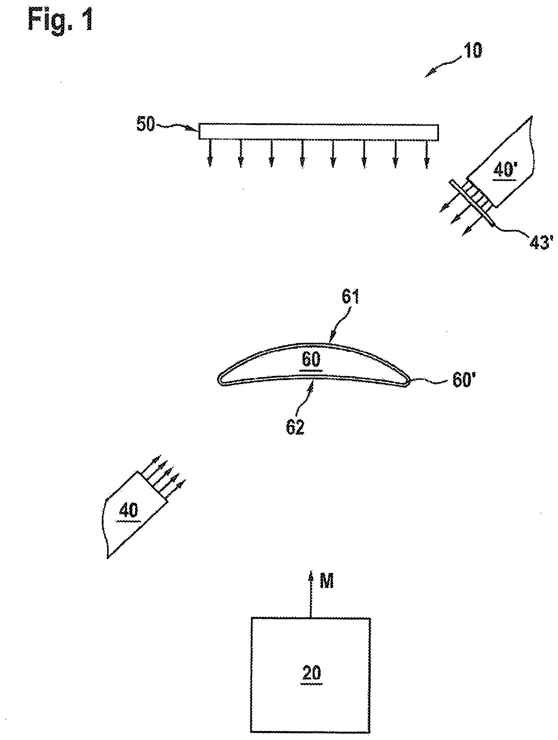

Die Figuren 1 bis 3 zeigen ein Ausführungsbeispiel erfindungsgemäßen Vorrichtung 10. Gemäß Figur 1 dient das Ausführungsbeispiel zum Vermessen eines optisch wirksamen Gegenstands 60 in Form einer optischen Linse (im Folgenden: Linse 60) mit einer im Ausführungsbeispiel konvexen Oberseite 61 und einer im Ausführungsbeispiel konkaven Unterseite 62. Die Linse 60 kann ferner in an sich bekannter Weise mit einer Beschichtung 60', bspw. einer Antireflex- und/oder einer Hartbeschichtung (Hardcoat) versehen sein. Die Die Vorrichtung 10 weist erfindungsgemäß zumindest eine erste Strahlungsquelle 40, ggf. eine weitere Strahlungsquelle 40' mit einer vorgeschalteten Schlitzblende oder Maske 43' zur Erzeugung eines Strahlungsmusters, eine zweite Strahlungsquelle 50 sowie eine Mess- und/oder Detektionseinrichtung 20 auf. Die Ausrichtung einer Mess- und/oder Detektionseinheit, bspw. des Kameraobjektivs 23 einer Kamera 22 der Mess- und/oder Detektionseinrichtung (siehe unten) definiert eine Messachse M.

Die Vorrichtung 10 kann in an sich bekannter Weise auf einem Gestell, einer Halterung oder einem Arbeitstisch angeordnet sein. Die Vorrichtung kann aber bspw. auch in eine Einrichtung zur Bearbeitung, bspw. zur formgebenden Bearbeitung eines optisch wirksamen Gegenstands, bspw. einer optischen Linse, insbesondere einer ophthalmischen Linse, integriert sein.

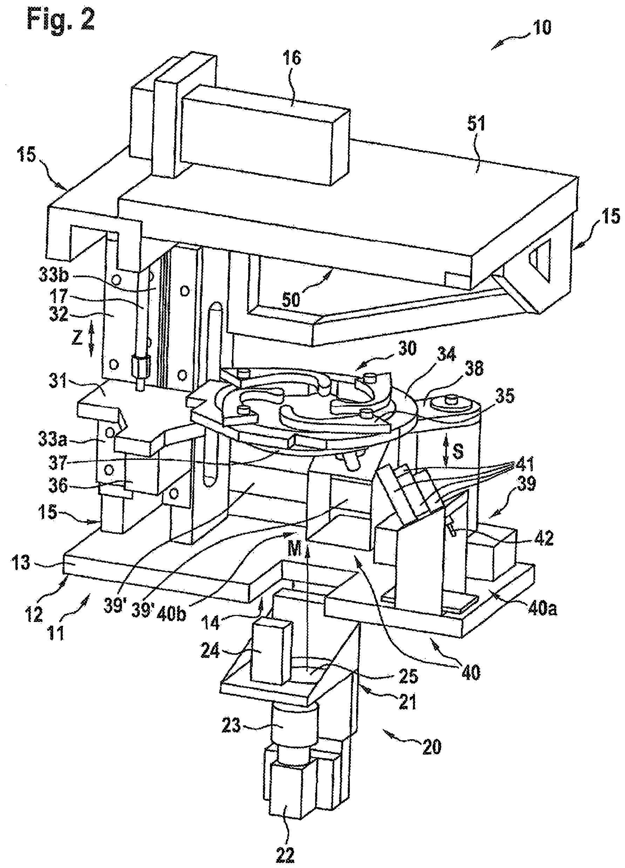

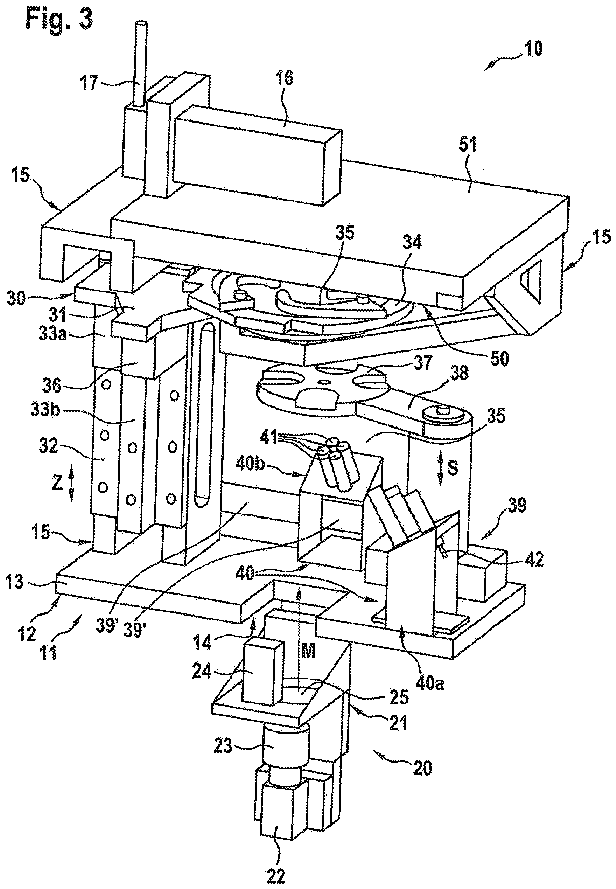

Wie aus den Figuren 2 und 3 ersichtlich ist, weist ein Ausführungsbeispiel einer erfindungsgemäßen Vorrichtung 10 einen Haltetisch 11 mit einer Unterseite 12 und einer Oberseite 13 auf.

An der Unterseite 12 des Haltetischs 11 ist eine Kameraeinheit 20 befestigt. Die Kameraeinheit 20 weist eine Halterung 21 auf, an der eine Kamera 22 (im Ausführungsbeispiel eine Kamera mit einem CCD-Sensor) mit einem Kameraobjektiv 23 gehalten ist. Das Kameraobjektiv 23 ist vertikal nach oben gerichtet. Die Kamera 22 ist im Ausführungsbeispiel mit einem Polarisationsfilter (nicht dargestellt) versehen. Daher ist oberhalb des Kameraobjektivs 23 auf der Halterung 21 ein Motor 24, im Ausführungsbeispiel ein elektrisch betriebener Schrittmotor, zur Drehung des Polarisationsfilters angeordnet. Der Polarisationsfilter dient in an sich bekannter Weise zur Bestimmung der Polarisationsrichtung einer polarisierten Linse 60. Ferner weist die Kamera 22 bzw. das Kameraobjektiv 23 eine Filtereinrichtung (nicht dargestellt) zur Absorption und/oder Deflektion der von den Laserdioden 41 (siehe unten) emittierten Anregungsstrahlung auf. Durch eine Öffnung 24 in der Halterung 21 und eine Ausnehmung 14 im Haltetisch ergibt sich für das Kameraobjektiv 23 ein freier Messweg in vertikaler Richtung, wodurch eine vertikal verlaufende Messachse M definiert ist.

Auf der Oberseite 13 des Haltetischs 11 ist ein Halteelement 15 angeordnet. Am Halteelement 15 ist ein Zahnstangengetriebe mit einer einen Motor aufweisenden Antriebseinheit 16 gehalten. Die Antriebseinheit 16 bewegt in an sich bekannter Weise eine Zahnstange 17 entlang einer Bewegungsachse z (im Folgenden: z-Achse). Die z-Achse und die Messachse M verlaufen im Ausführungsbeispiel in vertikaler Richtung parallel zueinander.

Am unteren Ende der Zahnstange 17 ist eine Halteplatte 31 einer Greifeinheit 30 ortsfest angeordnet. Die Halteplatte 31 ist an einem Führungsschuh (33a) befestigt. Der Führungsschuh 33a ist an einer Führungsschiene 33b vorzugsweise spielfrei geführt, bspw. in an sich bekannter Weise rollend vorgespannt). Die Führungsschiene 33b ist an einer Führungsplatte 32 befestigt, die wiederum an der Halterung 15 gehalten ist.

An der Halteplatte 31 ist eine Greifeinrichtung 34, im Ausführungsbeispiel eine Zentrier-/ Greifeinrichtung, mit bewegbaren Greifelementen 35 befestigt, wie sie bspw. aus der WO 2016/095939 A1 bekannt ist. Die Greifeinrichtung 34 dient zum Greifen und Zentrieren der Linse 60. Mit Hilfe des Zahnstangengetriebes kann die Halteplatte 31 und damit die Greifeinrichtung 34 entlang der Führungsschiene 33b in Richtung der z-Achse vertikal verschoben werden.

Die Greifelemente 35 sind im Ausführungsbeispiel pneumatisch bewegbar. Unterhalb der Halteplatte 31 ist daher ein pneumatischer Zylinderantrieb 36 zum Bewegen der Greifelemente 35 vorgesehen.

Unterhalb der Greifeinrichtung 34 ist ein Ablagetisch 37 angeordnet, der mittels eines Haltearms 38 um eine parallel zur z-Achse und parallel zur Messachse M verlaufende Schwenkachse S verschwenkbar (im Ausführungsbeispiel pneumatisch mittels eines Antriebszylinders 39') auf einer Lager- und Schwenkeinrichtung 39 angeordnet ist.

Auf der Oberseite 13 der Halteplatte 11 ist ferner eine erste Strahlungsquelle 40 vorgesehen. Im Ausführungsbeispiel besteht diese erste Strahlungsquelle 40 aus zwei Gruppen 40a, 40b von je vier Laserdioden 41. Die Laserdioden 41 jeder Gruppe 40a, 40b sind im Ausführungsbeispiel parallel zueinander in je zwei Reihen und in einem Winkel von 15° zur z-Achse bzw. zur Messachse M angeordnet. Die Laserdioden 41 können mit geeigneten Elementen zum Erzeugen linienförmiger Strahlung versehen sein, bspw. Zylinderlinsen, Rasterlinsen, diffraktiven optischen Elementen (DOE). Auch die Verwendung computergenerierter Hologramme (CGH) ist möglich. Die Laserdioden 41 sind im Ausführungsbeispiel ferner gegeneinander versetzt angeordnet. Im Ergebnis sind auch die von den Laserdioden 41 emittierten linienförmigen Strahlen senkrecht zu ihrer Ausbreitungsrichtung zueinander versetzt oder beabstandet. Im Ausführungsbeispiel beträgt der Abstand der linienförmigen Strahlen zueinander ca. 10 mm. Die beiden Gruppen 40a, 40b von Laserdioden 41 sind wiederum in einem rechten Winkel zueinander angeordnet. Die Laserdioden 41 sind über Leitungen 42 derart mit einer Stromversorgungseinrichtung (nicht dargestellt) verbunden, dass sie unabhängig voneinander und in beliebigen Kombinationen schaltbar sind.

Unterhalb der Antriebseinheit 16 für das Zahnstangengetriebe ist eine Aufnahmeplatte 51 zur Aufnahme einer zweiten Strahlungsquelle 50 angeordnet. Als zweite Strahlungsquelle 50 ist im Ausführungsbeispiel ein TFT-basierter Flüssigkristall-Flachbildschirm vorgesehen. Die zweite Strahlungsquelle 50 ist oberhalb der Greifeinrichtung 34 angeordnet und in einer senkrecht zur z-Achse bzw. zur Messachse M orientierten Ebene angeordnet.

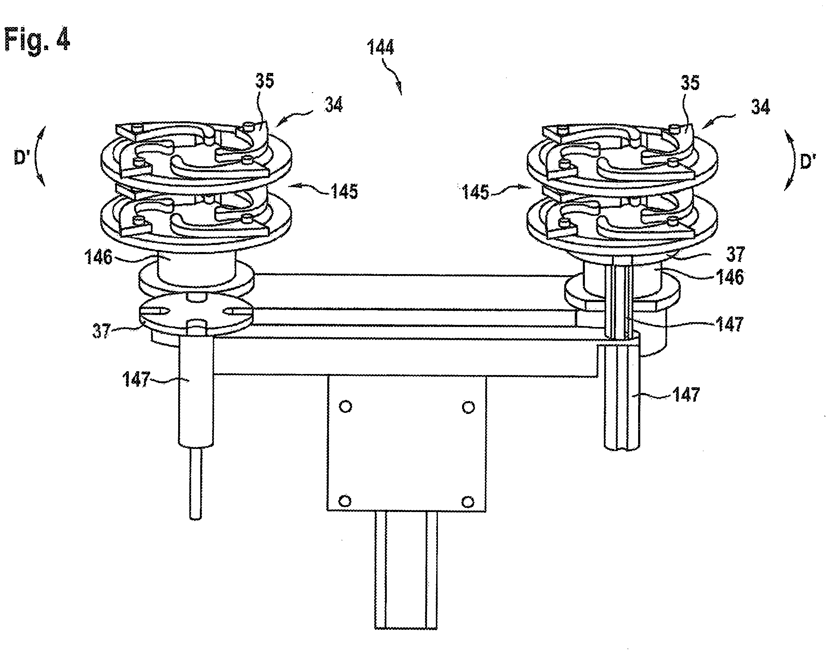

Die Messeinrichtung 10 kann auch aus zwei Teilen mit je einer Kamera 22, einer ersten Strahlungsquelle 40 und einer zweiten Strahlungsquelle 50 bestehen, wie sie oben beschrieben sind. Dann kann eine Greif- und Zentrieranordnung 144 vorgesehen sein, wie sie beispielhaft in Figur 4 dargestellt ist. Die Anordnung 144 weist insgesamt zwei Paare 145 von je zwei Greifeinrichtungen 34 mit Greifelementen 35, wie sie oben beschrieben sind, auf. Jedes Paar 145 von Greifeinrichtungen 34 ist einem Teil der Messeinrichtung 10 mit je einer Kamera 22, einer ersten Strahlungsquelle 40 und einer zweiten Strahlungsquelle 50 zugeordnet. Jedes Paar 145 von Greifeinrichtungen 34 ist auf einer Dreheinrichtung 146 in Richtung der Pfeile D um 180° drehbar gelagert. Jedem Paar 145 von Greifeinrichtungen 34 ist ferner je ein Ablagetisch 37, wie er oben beschrieben ist, zugeordnet. Jeder Ablagetisch 37 ist mittels einer Verstelleinrichtung 147 höhenverstellbar ausgebildet und so angeordnet, dass er sich in Bezug auf der ihr zugeordneten Greifeinrichtung 34 in einer Beladeposition gemäß Figur 2 (rechte Hälfte von Figur 4) oder in einer Messposition gemäß Figur 3 (linke Hälfte von Figur 4) befindet. Die zweite, in Figur 4 jeweils im Bildhintergrund angeordnete Greifeinrichtung 34 ist in Bezug auf die ihr zugeordneten Elemente Kamera 22, erste Strahlungsquelle 40 und zweite Strahlungsquelle 50 so positioniert, dass die unten beschriebene Messung stattfinden kann. In der Position gemäß der rechten Hälfte von Figur 4 kann die vordere Greifeinrichtung 34, wie unten beschrieben, mit einer zu vermessenden Linse 60 beladen bzw. entladen werden, während in der hinteren Greifeinrichtung 34 eine (nicht dargestellte) Linse gehalten und vermessen wird. In der Position gemäß der linken Hälfte von Figur 4 kann in der vorderen Greifeinrichtung 34 eine zu vermessende Linse 60 und in der hinteren Greifeinrichtung 34 eine fertig vermessene Linse 60 gehalten sein (nicht dargestellt), so dass dieses Paar 145 um 180° gedreht werden kann. Dann kann die zu vermessende Linse 60 wie unten beschrieben vermessen werden, während die fertig vermessene Linse 60 wie unten beschrieben entladen werden kann.

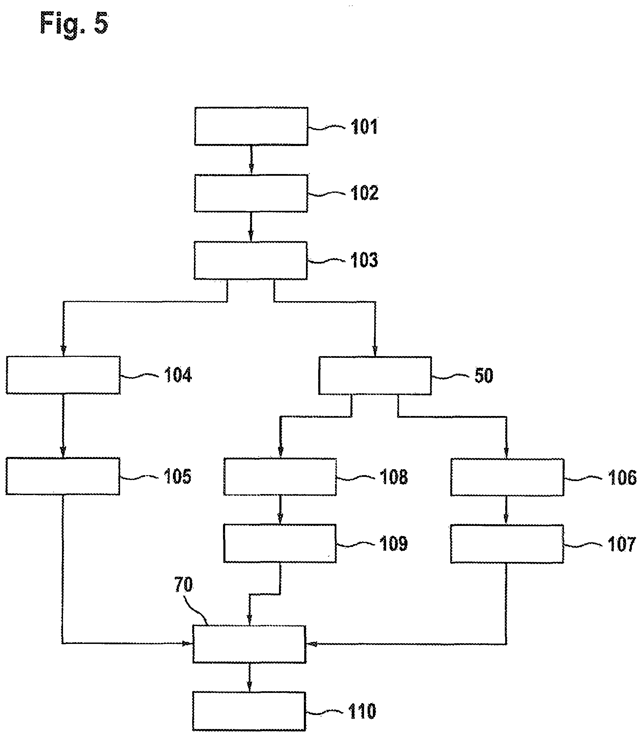

Im Folgenden wird ein Ausführungsbeispiel des erfindungsgemäßen Verfahrens beschrieben (vgl. Figur 5):
Zu Beginn des Verfahrens befindet sich die Greifeinrichtung 34 der erfindungsgemäßen Vorrichtung 10 in ihrer Beladeposition (vgl. Figur 2). In dieser Beladeposition ist der Ablagetisch 37 unmittelbar unterhalb der Greifeinrichtung 34 angeordnet.

Zunächst wird die Vorrichtung 10 in an sich bekannter Weise (vgl. WO 2016/095939 A1) im Verfahrensschritt 101 mit einem zu vermessenden optisch wirksamen Element, im Ausführungsbeispiel einer ggf. mit einer Beschichtung 60' versehenen Linse 60, bspw. für ein Brillenglas, beladen, indem dieses auf dem Ablagetisch 37 abgelegt wird. Die Linse 60 wird dabei so orientiert, dass ihre im Ausführungsbeispiel konkave Unterseite 62 zum Kameraobjektiv 23 hin und ihre im Ausführungsbeispiel konvexe Oberseite 61 zur zweiten Strahlungsquelle 50 hin ausgerichtet ist. Ferner werden im Verfahrensschritt 102 die Greifelemente 35 zunächst derart betätigt, dass die Linse 60 entlang ihres Umfangs innerhalb der Greifeinrichtung 34 in Bezug auf diese zentriert wird. Anschließend werden im Verfahrensschritt 102 die Greifelemente 35 der Greifeinrichtung 34 derart betätigt, dass die Linse 60 mittels der Greifelemente 35 klemmend gehalten wird, wobei die Zentrierung der Linse 60 im Wesentlichen beibehalten wird. Nun wird im Verfahrensschritt 103 der Ablagetisch 37 aus dem Messbereich des Kameraobjektivs 23 der Kamera 22 herausgeschwenkt, um die Messachse M für das Kameraobjektiv 23 freizumachen. Schließlich wird im Verfahrensschritt 103 die Greifeinrichtung 34 zusammen mit der darin klemmend gehaltenen Linse 60 mittels des Zahnstangengetriebes entlang der z-Achse nach oben in Richtung der zweiten Strahlungsquelle 50 verschoben.

Die Greifeinrichtung 34 der erfindungsgemäßen Vorrichtung 10 befindet sich nun in einer definierten Messposition (vgl. Figur 2). Diese Messposition kann unabhängig von den Eigenschaften des zu vermessenden optisch wirksamen Elements unverändert bleiben, um zur Standardisierung des erfindungsgemäßen Verfahrens beizutragen.

Es werden, sukzessiv oder zeitgleich, drei Messverfahren durchgeführt (vgl. Figur 3):

### 1. Bestimmung der räumlichen Lage der Unterseite 62 der Linse 60

Im Verfahrensschritt 104 emittiert jede Laserdiode der beiden Gruppen 40a, 40b von Laserdioden 41 einen linienförmigen Strahl, im Ausführungsbeispiel Anregungsstrahlung mit einer Wellenlänge von 405 nm oder 450 nm, aus. Diese definierten Wellenlängen können bspw. mittels eines nicht dargestellten Filters aus der von den Laserdioden 41 emittierten Strahlung herausgefiltert werden.

Die von den Laserdioden 41 emittierten linienförmigen Strahlen weisen aufgrund der Anordnung der Laserdioden 41 senkrecht zu ihrer Ausbreitungsrichtung zueinander einen Abstand von ca. 10 mm auf. Im Ergebnis treffen die von allen im Ausführungsbeispiel acht Laserdioden emittierten linienförmigen Strahlen in Form eines Linienmusters von zwei rechtwinklig zueinander angeordneten Gruppen aus je vier Linien auf den Werkstoff der Linse 60 und/oder ihrer Beschichtung 60'. Die von den derart angeordneten linienförmigen Strahlen angeregte Fluoreszenzstrahlung des Werkstoffs der Linse 60 und/oder ihrer Beschichtung 60' mit einer Wellenlänge von mehr als 405 nm bzw. 450 nm wird daher in Form von zwei rechtwinklig zueinander angeordneten Gruppen aus je vier voneinander beabstandeter Linien (also in Form eines Gitter- oder Karomusters) emittiert.

Im Ausführungsbeispiel treffen zwei im rechten Winkel zueinander angeordnete Gruppen aus je vier linienförmigen Strahlen auf die im Ausführungsbeispiel konkave Unterseite 62 der Linse 60. Die vom Werkstoff der Linse 60 und/oder ihrer Beschichtung 60'emittierte Fluoreszenzstrahlung bildet somit ein Karo- oder Gittermuster aus zwei mal vier fluoreszierenden Linien mit einer Wellenlänge von im Ausführungsbeispiel mehr als 405 nm bzw. 450 nm. Diese Fluoreszenzstrahlung wird im Verfahrensschritt 105 vom Kameraobjektiv 23 erfasst und im Ausführungsbeispiel mittels eines CCD-Sensors der Kamera 22 detektiert. Wenn die Kamera 22 bzw. das Kameraobjektiv 23 einen Filter zur Absorption oder Deflektion des von den Laserdioden 41 emittierten Anregungsstrahlung aufweist, kann die Fluoreszenzstrahlung besonders zuverlässig und störungsarm detektiert werden. Die daraus resultierenden Messdaten werden einer Auswerteeinheit 70 zugeführt.

Die Messdaten werden mittels eines an sich bekannten Triangulationsverfahrens (Streifenprojektion als 3D-Messverfahren) ausgewertet. Damit wird in an sich bekannter Weise die räumliche Lage der im Ausführungsbeispiel konkaven Unterseite 62 der Linse 60 ermittelt. Bei nicht symmetrischen Linsen (bspw. Freiformlinsen) ist das Messergebnis eindeutig. Bei symmetrischen Linsen (bspw. sphärischen Linsen) werden zur Bestimmung ihrer Lage im Raum noch Daten zu ihrer Randkontur (siehe dazu unten) benötigt.

Die erfindungsgemäße Vorrichtung 10 kann kalibriert werden, indem das vorstehend beschriebene Verfahren mit einem Flachglas als Messobjekt durchgeführt wird.

### 2. Bestimmung von Kenngrößen der Linse 60

Die zweite Strahlungsquelle 50 (im Ausführungsbeispiel ein TFT-basierter LCD-Bildschirm) sendet im Verfahrensschritt 106 Strahlen in einem definierten Muster (bspw. einem Streifenmuster) in Richtung der im Ausführungsbeispiel konvexen Oberseite 61 der Linse 60 aus. Die Strahlen treten durch die Linse 60 hindurch, wobei das definierte Muster entsprechend der Kenngrößen der Linse 60, insbesondere ihrer Kontur, ihrer Randkontur, etwaiger Markierungen (bspw. Lasergravuren) und/oder etwaiger Mehrstärkenzonen (bspw. Bifokal- oder Trifokalzonen) der Linse 60 verändert wird. Die resultierende Transmissionsstrahlung wird im Verfahrensschritt 107 vom Kameraobjektiv 23 der Kamera 22 erfasst und im Ausführungsbeispiel mittels des CCD-Sensors der Kamera 22 in Form von Messsignalen detektiert. Die aus dieser Transmissionsmessung resultierenden Messdaten werden der Auswerteeinheit 70 zugeführt und ausgewertet. Die erfindungsgemäße Vorrichtung 10 kann kalibriert werden, indem das vorstehend beschriebene Verfahren mit einem Flachglas als Messobjekt durchgeführt wird.

### 3. Bestimmung der Brechkraft der Linse 60

Die zweite Strahlungsquelle 50 (im Ausführungsbeispiel ein TFT-basierter LCD-Bildschirm) sendet im Verfahrensschritt 108 Strahlen in Form definierter Pixel in Richtung der im Ausführungsbeispiel konvexen Oberseite 61 der Linse 60 aus. Die Strahlen treten durch die Linse 60 hindurch, wobei sie abhängig von den optischen Eigenschaften der Linse 60, abgelenkt werden. Die resultierende Transmissionsstrahlung wird im Verfahrensschritt 109 vom Kameraobjektiv 23 der Kamera 22 erfasst und im Ausführungsbeispiel mittels des CCD-Sensors der Kamera 22 in Form von Messpunkten detektiert. Zur Auswertung der Messpunkte wird im Ausführungsbeispiel ein an sich bekanntes Raytracing-Verfahren verwendet (d. h. ein auf der Aussendung von Strahlen basierender Algorithmus zur Rückverfolgung der ermittelten Messpunkte zu ihrer Quelle, also den definierten Pixeln). Mittels des Raytracing-Verfahrens werden die vom CCD-Sensor der Kamera 22 erfassten resultierenden Messpunkte mit den auf der zweiten Strahlungsquelle 50 angeordneten Pixeln (d. h. den Ausgangspunkten der in Form von Messpunkten erfassten Strahlen) korreliert. Zum Zwecke der Zuordnung der vom CCD-Sensor erfassten Messpunkte zu den in der zweiten Strahlungsquelle 50 definierten Pixeln ist die zweite Strahlungsquelle 50 in an sich bekannter Weise entsprechend kodiert. Die aus der Transmissionsmessung und dem Raytracing-Verfahren resultierenden Messdaten werden der Auswerteeinheit 70 zugeführt. Bei diesem Messverfahren ist es von Vorteil, wenn das definierte Muster der von der zweiten Strahlungsquelle 50 ausgesendeten Strahlen so gewählt ist, dass am CCD-Sensor eine zureichende Signaltrennung, d. h. eine zureichende Auflösung der Messsignale erzielt wird, so dass im optimalen Fall jedes Messsignal ausgewertet werden kann.

Die Auswertung der Messdaten ergibt die Brechkraft der Linse 60. Die erfindungsgemäße Vorrichtung 10 kann kalibriert werden, indem das vorstehend beschriebene Verfahren mit einem Flachglas als Messobjekt durchgeführt wird.

Die Verknüpfung dieser Messdaten erlaubt im Verfahrensschritt 110 die Bestimmung einer flächigen Auswertung der Brechkraft der Linse 60 (so genannte "Power Map"). Damit ist es unter anderem möglich, auftragsgemäß in die Linse 60 eingearbeitete Prismen von Prismenfehlern zu unterscheiden. Dies trifft sowohl auf Prismenfehler zu, die bei der formgebenden Bearbeitung der Unterseite 62 der Linse 60 entstanden sind, als auch auf Prismenfehler, die aufgrund einer nicht korrekten Positionierung der Linse 60 in der Vorrichtung 10 detektiert werden.

Die oben beschriebenen Verfahren zur Bestimmung der räumlichen Lage der Linse 60 (Punkt 1) und zur Bestimmung ihrer Kenngrößen (Punkt 2) können auch deflektometrisch durchgeführt werden. Hierzu wird eine von einer Strahlungsquelle emittierten Strahlung verwendet, für welche die Linse 60 undurchlässig ist. Die Strahlungsquelle wird derart positioniert, dass die Linse 60 die von der Strahlungsquelle emittierte Strahlung in Richtung der Messachse M, also in Richtung des Kameraobjektivs 23 reflektiert, so dass die resultierende Reflexionsstrahlung vom Kameraobjektiv 23 erfasst und vom CCD-Sensor der Kamera 22 detektiert werden kann. Die Auswertung der resultierenden Messdaten erfolgt dann in an sich bekannter Weise.

### Bezugszeichenliste

| | | | |
|---|---|---|---|
| 10 | Vorrichtung | 40 | erste Strahlungsquelle |
| 11 | Haltetisch | 40a,b | Gruppen von 40 |
| 12 | Unterseite von 11 | 40' | weitere Strahlungsquelle |
| 13 | Oberseite von 11 | 41 | Laserdioden |
| 14 | Ausnehmung | 42 | Leitungen |
| 15 | Halteelement | 43' | Maske |
| 16 | Antriebseinheit (Zahnstangengetriebe) | 44-49 | (frei) |
| 17 | Zahnstange | | |
| 18 | Motor (Zahnstangengetriebe) | 50 | zweite Strahlungsquelle |
| | | 51 | Aufnahmeplatte |
| 19 | (frei) | 52-59 | (frei) |
| 20 | Mess- und/oder Detektionseinrichtung | 60 | optisch wirksamer Gegenstand |
| 21 | Halterung von 20 | 60' | Beschichtung von 60 |
| 22 | Kamera | 61 | Oberseite von 60 |
| 23 | Kameraobjektiv | 62 | Unterseite von 60 |
| 24 | Motor (Polarisationsfilter) | 63 | Rand von 60 |
| 25 | Öffnung in 21 | 64-69 | (frei) |
| 26-29 | (frei) | 70 | Auswertungseinrichtung |
| 30 | Greifeinheit | z | Bewegungsachse (z-Achse) |
| 31 | Halteplatte | M | Messachse |
| 32 | Führungsplatte | S | Schwenkachse |
| 33a | Führungsschuh | | |
| 33b | Führungsschiene | 101 | |
| 34 | Greifeinrichtung | - | |
| 35 | Greifelemente | 110 | Verfahrensschritte |
| 36 | pneumatischer Zylinderantrieb für 35 | | |
| 37 | Ablagetisch | 144 | Greif- und Zentrieranordnung |
| 38 | Haltearm von 37 | 145 | Paar von Greifeinrichtungen 34 |
| 39 | Lager- und Schwenkvorrichtung für 38 | 146 | Dreheinrichtung |
| 39' | Antriebszylinder für 39 | 147 | Verstelleinrichtung |

## Patentansprüche

1. Verfahren zur Vermessung mindestens eines optisch wirksamen Gegenstands (60) mit einer Oberseite (61) und einer Unterseite (62), wobei der mindestens eine optisch wirksame Gegenstand (60) mit einer Messstrahlung bestrahlt wird und die daraus resultierende Strahlung gemessen wird,
wobei als Messstrahlung mindestens eine durch den optisch wirksamen Gegenstand (60) hindurchtretende Messstrahlung verwendet und als resultierende Strahlung die Transmissionsstrahlung gemessen und/oder detektiert wird,
wobei des Weiteren als Messstrahlung mindestens eine Anregungsstrahlung zur Anregung von Lumineszenzstrahlung im Werkstoff des optisch wirksamen Gegenstands (60) und/oder im Werkstoff einer Beschichtung (60') des optisch wirksamen Gegenstands (60) verwendet und als resultierende Strahlung die Lumineszenzstrahlung gemessen und/oder detektiert wird,
wobei die resultierende Lumineszenzstrahlung zur Triangulation der Oberfläche(n) der bestrahlten Oberseite (61) und/oder der bestrahlten Unterseite (62) des optisch wirksamen Gegenstands (60) verwendet wird, und
wobei die resultierende Transmissionsstrahlung zur Bestimmung der Brechkraft des optisch wirksamen Gegenstands (60) und/oder von Kenngrößen des optisch wirksamen Gegenstands (60) verwendet wird.

2. Verfahren nach Anspruch 1, **dadurch gekennzeichnet, dass** des Weiteren als Messstrahlung mindestens eine vom optisch wirksamen Gegenstand reflektierbare Strahlung verwendet wird und als resultierende Strahlung die Reflexionsstrahlung gemessen und/oder detektiert wird.

3. Verfahren nach Anspruch 2, **dadurch gekennzeichnet, dass** die resultierende Reflexionsstrahlung zur Triangulation und/oder zur deflektometrischen Vermessung der Oberfläche(n) der bestrahlten Oberseite (61) und/oder der bestrahlten Unterseite (62) des optisch wirksamen Gegenstands (60) verwendet wird.

4. Verfahren nach Anspruch 2 oder 3, **dadurch gekennzeichnet, dass** zumindest eine Anregungsstrahlung zur Anregung von Fluoreszenzstrahlung im Werkstoff des optisch wirksamen Gegenstands (60) und/oder im Werkstoff der Beschichtung (60') des optisch wirksamen Gegenstands (60) verwendet wird.

5. Verfahren nach Anspruch 2, **dadurch gekennzeichnet, dass** die resultierende Reflexionsstrahlung zur Bestimmung der Brechkraft des optisch wirksamen Gegenstands (60) und/oder von Kenngrößen des optisch wirksamen Gegenstands (60) verwendet wird.

6. Verfahren nach einem der voranstehenden Ansprüche, **gekennzeichnet durch** die flächige Auswertung der Brechkraft des optisch wirksamen Gegenstands (60).

7. Verfahren nach einem der voranstehenden Ansprüche, **dadurch gekennzeichnet, dass** die Messung mittels der Transmissionsstrahlung und die Messung mittels der Anregungsstrahlung zeitgleich durchgeführt werden.

8. Vorrichtung (10) zur Vermessung mindestens eines optisch wirksamen Gegenstands (60), mit einer Strahlungsquelle, einer Messeinrichtung, Mitteln (30) zum Halten des mindestens einen optisch wirksamen Gegenstands (60) zwischen der Strahlungsquelle und der Messeinrichtung,
wobei die Vorrichtung (10) zumindest eine erste Strahlungsquelle (40) und zumindest eine zweite Strahlungsquelle (50) aufweist,
wobei die Vorrichtung mindestens eine Mess- und/oder Detektionseinrichtung (20) sowie mindestens eine Auswerteeinrichtung (70) aufweist, und
wobei die zumindest zweite Strahlungsquelle (50) so angeordnet ist, dass sie zu einer Oberseite (61) des optisch wirksamen Gegenstands (60) hin orientiert ist und dazu eingerichtet ist eine zumindest durch den optisch wirksamen Gegenstand (60) hindurchtretende Strahlung emittieren,
wobei die zumindest erste Strahlungsquelle (40) so angeordnet ist, dass sie zu einer Oberseite (61) oder einer Unterseite (62) des optisch wirksamen Gegenstands (60) hin orientiert ist und dazu eingerichtet ist eine Anregungsstrahlung zur Anregung von Lumineszenzstrahlung im Werkstoff des optisch wirksamen Gegenstands (60) und/oder im Werkstoff einer Beschichtung (60') des optischen Gegenstands (60) zu emittieren, und
wobei die Vorrichtung (10) dazu ausgebildet ist, ein Verfahren nach einem der voranstehenden Ansprüche durchzuführen.

9. Vorrichtung nach Anspruch 8, **dadurch gekennzeichnet, dass** die zumindest erste Strahlungsquelle (40) dazu eingerichtet ist mindestens eine Anregungsstrahlung zur Anregung von Fluoreszenzstrahlung im Werkstoff des optisch wirksamen Gegenstands (60) und/oder im Werkstoff der Beschichtung (60') des optisch wirksamen Gegenstands (60) zu emittieren.

10. Vorrichtung nach Anspruch 8 oder 9, **dadurch gekennzeichnet, dass** die zumindest erste Strahlungsquelle (40) dazu eingerichtet ist gitterförmige und/oder rasterförmige Lumineszenzstrahlung anzuregen.

11. Vorrichtung nach einem der Ansprüche 8 bis 10, **dadurch gekennzeichnet, dass** die zumindest erste Strahlungsquelle (40) dazu eingerichtet ist eine zumindest vom optisch wirksamen Gegenstand reflektierbare Strahlung zu emittieren.

12. Vorrichtung nach einem der Ansprüche 8 bis 11, **dadurch gekennzeichnet, dass** die zumindest zweite Strahlungsquelle (50) dazu eingerichtet ist mindestens eine Strahlung in Form von Pixeln und/oder in Form von Mustern zu emitteren.

13. Vorrichtung nach einem der Ansprüche 8 bis 12, **dadurch gekennzeichnet, dass** die mindestens eine Mess- und/oder Detektionseinrichtung (20) und die zumindest erste Strahlungsquelle (40) so angeordnet sind, dass sie zu derselben Oberseite (61) bzw. Unterseite (62) des optisch wirksamen Gegenstands (60) hin orientiert sind.

## Claims

1. Method for measuring at least one optically active object (60) having an upper side (61) and a lower side (62), wherein the at least one optically active object (60) is irradiated with a measurement radiation and the radiation resulting therefrom is measured,
wherein at least one measurement radiation passing through the optically active object (60) is used as measurement radiation and the transmission radiation is measured and/or detected as resulting radiation,
wherein furthermore at least one excitation radiation for exciting luminescence radiation in the material of the optically active object (60) and/or in the material of a coating (60') of the optically active object (60) is used as measurement radiation and the luminescence radiation is measured and/or detected as resulting radiation,
wherein the resulting luminescence radiation is used for triangulation of the surface(s) of the irradiated upper side (61) and/or of the irradiated lower side (62) of the optically active object (60), and
wherein the resulting transmission radiation is used for determining the refractive power of the optically active object (60) and/or of characteristic variables of the optically active object (60).

2. Method according to Claim 1, **characterized in that** furthermore at least one radiation which is reflectable by the optically active object is used as measurement radiation and the reflection radiation is measured and/or detected as resulting radiation.

3. Method according to Claim 2, **characterized in that** the resulting reflection radiation is used for triangulation and/or for deflectometric measurement of the surface(s) of the irradiated upper side (61) and/or of the irradiated lower side (62) of the optically active object (60).

4. Method according to Claim 2 or 3, **characterized in that** at least one excitation radiation for exciting fluorescence radiation in the material of the optically active object (60) and/or in the material of the coating (60') of the optically active object (60) is used.

5. Method according to Claim 2, **characterized in that** the resulting reflection radiation is used for determining the refractive power of the optically active object (60) and/or of characteristic variables of the optically active object (60).

6. Method according to one of the preceding claims, **characterized by** the areal evaluation of the refractive power of the optically active object (60).

7. Method according to one of the preceding claims, **characterized in that** the measurement by means of the transmission radiation and the measurement by means of the excitation radiation are carried out simultaneously.

8. Apparatus (10) for measuring at least one optically active object (60), having a radiation source, a measuring device, means (30) for holding the at least one optically active object (60) between the radiation source and the measuring device, wherein the apparatus (10) has at least one first radiation source (40) and at least one second radiation source (50),
wherein the apparatus has at least one measuring and/or detection device (20) and at least one evaluation device (70), and
wherein the at least second radiation source (50) is arranged such that it is oriented towards an upper side (61) of the optically active object (60) and is configured to emit radiation passing at least through the optically active object (60),
wherein the at least first radiation source (40) is arranged such that it is oriented towards an upper side (61) or a lower side (62) of the optically active object (60) and is configured to emit an excitation radiation for exciting luminescence radiation in the material of the optically active object (60) and/or in the material of a coating (60') of the optical object (60), and
wherein the apparatus (10) is adapted to carry out a method according to one of the preceding claims.

9. Apparatus according to Claim 8, **characterized in that** the at least first radiation source (40) is configured to emit at least one excitation radiation for exciting fluorescence radiation in the material of the optically active object (60) and/or in the material of the coating (60') of the optically active object (60).

10. Apparatus according to Claim 8 or 9, **characterized in that** the at least first radiation source (40) is configured to excite grid-shaped and/or raster-shaped luminescence radiation.

11. Apparatus according to one of Claims 8 to 10, **characterized in that** the at least first radiation source (40) is configured to emit radiation which is at least reflectable by the optically active object.

12. Apparatus according to one of Claims 8 to 11, **characterized in that** the at least second radiation source (50) is configured to emit at least one radiation in the form of pixels and/or in the form of patterns.

13. Apparatus according to one of Claims 8 to 12, **characterized in that** the at least one measuring and/or detection device (20) and the at least first radiation source (40) are arranged such that they are oriented towards the same upper side (61) or lower side (62) of the optically active object (60).

## Revendications

1. Procédé de mesure d'au moins un objet optiquement actif (60) avec une face supérieure (61) et une face inférieure (62), l'au moins un objet optiquement actif (60) étant irradié avec un rayonnement de mesure et le rayonnement qui en résulte étant mesuré,
au moins un rayonnement de mesure traversant l'objet optiquement actif (60) étant utilisé comme rayonnement de mesure et le rayonnement de transmission étant mesuré et/ou détecté comme rayonnement résultant,
au moins un rayonnement d'excitation pour l'excitation d'un rayonnement de luminescence dans le matériau de l'objet optiquement actif (60) et/ou dans le matériau d'un revêtement (60') de l'objet optiquement actif (60) étant en outre utilisé comme rayonnement de mesure et le rayonnement de luminescence étant mesuré et/ou détecté comme rayonnement résultant,
le rayonnement de luminescence résultant étant utilisé pour la triangulation de la/des surface(s) de la face supérieure irradiée (61) et/ou de la face inférieure irradiée (62) de l'objet optiquement actif (60), et
le rayonnement de transmission résultant étant utilisé pour la détermination de la puissance de réfraction de l'objet optiquement actif (60) et/ou de grandeurs caractéristiques de l'objet optiquement actif (60).

2. Procédé selon la revendication 1, **caractérisé en ce qu'**au moins un rayonnement pouvant être réfléchi par l'objet optiquement actif est en outre utilisé comme rayonnement de mesure et le rayonnement de réflexion est mesuré et/ou détecté comme rayonnement résultant.

3. Procédé selon la revendication 2, **caractérisé en ce que** le rayonnement de réflexion résultant est utilisé pour la triangulation et/ou pour la mesure par déflecto-métrie de la/des surface(s) de la face supérieure irradiée (61) et/ou de la face inférieure irradiée (62) de l'objet optiquement actif (60).

4. Procédé selon la revendication 2 ou 3, **caractérisé en ce qu'**au moins un rayonnement d'excitation pour l'excitation d'un rayonnement de fluorescence dans le matériau de l'objet optiquement actif (60) et/ou dans le matériau du revêtement (60') de l'objet optiquement actif (60) est utilisé.

5. Procédé selon la revendication 2, **caractérisé en ce que** le rayonnement de réflexion résultant est utilisé pour la détermination de la puissance de réfraction de l'objet optiquement actif (60) et/ou de grandeurs caractéristiques de l'objet optiquement actif (60).

6. Procédé selon l'une quelconque des revendications précédentes, **caractérisé par** l'évaluation à plat de la puissance de réfraction de l'objet optiquement actif (60).

7. Procédé selon l'une quelconque des revendications précédentes, **caractérisé en ce que** la mesure au moyen du rayonnement de transmission et la mesure au moyen du rayonnement d'excitation sont réalisées simultanément.

8. Appareil (10) de mesure d'au moins un objet optiquement actif (60), avec une source de rayonnement, un dispositif de mesure, des moyens (30) pour maintenir l'au moins un objet optiquement actif (60) entre la source de rayonnement et le dispositif de mesure,
l'appareil (10) présentant au moins une première source de rayonnement (40) et au moins une deuxième source de rayonnement (50),
l'appareil présentant au moins un dispositif de mesure et/ou de détection (20) ainsi qu'au moins un dispositif d'évaluation (70), et
l'au moins une deuxième source de rayonnement (50) étant disposée de manière à être orientée vers une face supérieure (61) de l'objet optiquement actif (60) et étant conçue pour émettre un rayonnement traversant au moins l'objet optiquement actif (60),
l'au moins une première source de rayonnement (40) étant disposée de manière à être orientée vers une face supérieure (61) ou une face inférieure (62) de l'objet optiquement actif (60) et étant conçue pour émettre un rayonnement d'excitation pour l'excitation d'un rayonnement de luminescence dans le matériau de l'objet optiquement actif (60) et/ou dans le matériau d'un revêtement (60') de l'objet optique (60), et
l'appareil (10) étant conçu pour réaliser un procédé selon l'une quelconque des revendications précédentes.

9. Appareil selon la revendication 8, **caractérisé en ce que** l'au moins une première source de rayonnement (40) est conçue pour émettre au moins un rayonnement d'excitation pour l'excitation d'un rayonnement de fluorescence dans le matériau de l'objet optiquement actif (60) et/ou dans le matériau du revêtement (60') de l'objet optiquement actif (60).

10. Appareil selon la revendication 8 ou 9, **caractérisé en ce que** l'au moins une première source de rayonnement (40) est conçue pour exciter un rayonnement de luminescence en forme de grille et/ou en forme de trame.

11. Appareil selon l'une quelconque des revendications 8 à 10, **caractérisé en ce que** l'au moins une première source de rayonnement (40) est conçue pour émettre un rayonnement pouvant être réfléchi au moins par l'objet optiquement actif.

12. Appareil selon l'une quelconque des revendications 8 à 11, **caractérisé en ce que** l'au moins une deuxième source de rayonnement (50) est conçue pour émettre au moins un rayonnement sous forme de pixels et/ou sous forme de motifs.

13. Appareil selon l'une quelconque des revendications 8 à 12, **caractérisé en ce que** l'au moins un dispositif de mesure et/ou de détection (20) et l'au moins une première source de rayonnement (40) sont disposés de manière à être orientés vers la même face supérieure (61) ou face inférieure (62) de l'objet optiquement actif (60).
